# EUROPÄISCHE PATENTSCHRIFT

(11) **EP 3 412 193 B1**
(45) Veröffentlichungstag und Bekanntmachung des Hinweises auf die Patenterteilung: **17.08.2022**
(21) Anmeldenummer: 18175869.9
(22) Anmeldetag: 05.06.2018
(51) Int. Cl.: A47L 9/28

(54) **VERFAHREN ZUM BETRIEB EINES EINEN AKKUMULATOR AUFWEISENDEN HAUSHALTSGERÄTES**
METHOD FOR OPERATING A HOUSEHOLD APPLIANCE HAVING A BATTERY
PROCÉDÉ DE FONCTIONNEMENT D'UN APPAREIL ÉLECTROMÉNAGER COMPORTANT UN ACCUMULATEUR

(30) Priorität: 08.06.2017 DE 102017112663
(43) Veröffentlichungstag der Anmeldung: 12.12.2018
(73) Patentinhaber: Vorwerk & Co. Interholding GmbH, 42275 Wuppertal (DE)
(72) Erfinder: Erkek, David, 5000 Aarau (CH); Hackert, Georg, 44869 Bochum (DE); Isenberg, Gerhard, 50668 Köln (DE); Ortmann, Roman, 50354 Hürth (DE); Schmidt, Andreas, 40822 Mettmann (DE)
(74) Vertreter: Müller, Enno

(56) Entgegenhaltungen:
- EP-A2- 2 897 016
- DE-A1-102012 112 403
- US-A1- 2005 229 338
- US-A1- 2017 013 369

## Beschreibung

### Gebiet der Technik

Die Erfindung betrifft ein Verfahren zum Betrieb eines einen Akkumulator aufweisenden Haushaltsgerätes, wobei ein Ladestartzeitpunkt eines Ladebetriebs zum Laden des Akkumulators in Abhängigkeit von vorgegebenen Bedingungen gesteuert wird.

Des Weiteren betrifft die Erfindung ein Haushaltsgerät mit einem Ackumulator und einer Steuer- und Auswerteeinrichtung zum Steuern eines Ladestartzeitpunktes eines Ladebetriebs des Akkumulators.

### Stand der Technik

Verfahren und Haushaltsgeräte der vorgenannten Art sind im Stand der Technik bekannt.

Haushaltsgeräte im Sinne der Erfindung sind beispielsweise Reinigungsgeräte wie Staubsauger, Feuchtwischgeräte und/ oder Kombinationen dieser, elektromotorisch betriebene Küchenmaschinen, elektromotorisch betriebene Werkzeuge, Schleif- und/oder Poliereinrichtungen, Rasenmäher und dergleichen. Insbesondere auch solche Haushaltsgeräte, welche selbsttätig verfahrbar sind, beispielsweise ausgebildet als Saugroboter, Wischroboter, Mähroboter, Polierroboter und dergleichen.

Es ist bekannt, den Akkumulator eines Haushaltsgerätes mittels einer Ladestation und/oder eines Ladenetzteils zu laden, wobei ein Ladestartzeitpunkt nach vorgegebenen Bedingungen gesteuert wird.

Die Druckschrift JP 2004-305495 A offenbart beispielsweise eine Steuerung eines Ladestartzeitpunktes für einen Staubsauger, wobei ein Ladestartzeitpunkt täglich zu einem gleichen Zeitpunkt eintritt, beispielsweise um einen vergünstigten Strompreis in der Nacht zu nutzen, oder variabel in Abhängigkeit von der Energieerzeugung einer Photovoltaikanlage.

Des Weiteren ist es beispielsweise aus der Druckschrift WO 2016/146194 A1 in Bezug auf einen Werkzeugkoffer mit einer integrierten Ladestation und einem Handwerkzeug bekannt, einen Ladestartzeitpunkt bei einem Öffnen oder Schließen des Werkzeugkoffers zu starten und eine Ladegeschwindigkeit im Sinne einer Schnellladung oder einer Standardladung zu variieren.

Nachteilig bei den bekannten Lösungen ist, dass das Aufladen des Ackumulators zu einem bestimmten Zeitpunkt gesteuert wird und der Akkumulator nach Beendigung des vollständigen Ladevorgangs in einem Ladungserhaltungsmodus kontinuierlich nachgeladen werden muss, um eine maximale Kapazität aufrechtzuerhalten. Der Ladungserhaltungsmodus verringert die Lebensdauer des Akkumulators.

Daneben offenbart die Veröffentlichungsschrift US 2005/229338 A1 ein Reinigungsgerät, bei welchem ausgehend von einer durch einen Nutzer gewählten Startzeit ein Zeitpunkt berechnet wird, zu dem ein Akkumulator des Reinigungsgerätes geladen sein wird. Dazu wird der Startzeitpunkt mit einer Zeitspanne die zum Aufladen des Akkumulators erforderlich ist, addiert, um den Zeitpunkt zu ermitteln, zu welchem das Reinigungsgerät betriebsbereit ist. In der Zwischenzeit kann die Verwendung des Reinigungsgerätes untersagt werden.

### Zusammenfassung der Erfindung

Ausgehend von dem vorgenannten Stand der Technik ist es Aufgabe der Erfindung, ein vorgenanntes Verfahren bzw. ein Haushaltsgerät, welches ein solches Verfahren nutzt, derart weiterzubilden, dass ein Ladungserhaltungsmodus für den Akkumulator entfallen kann und dennoch zum Verwendungszeitpunkt eine benötigte Ladekapazität zur Verfügung steht.

Zur Lösung dieser Aufgabe schlägt die Erfindung vor, dass die Steuer- und Auswerteeinrichtung den Ladestartzeitpunkt in Abhängigkeit von einer Ladedauer und einem vorgegebenen Verwendungszeitpunkt des Haushaltsgerätes so steuert, dass der Ladebetrieb genau dann abgeschlossen ist, wenn der Verwendungszeitpunkt erreicht ist, wobei die Steuer- und Auswerteeinrichtung eine voraussichtliche Ladedauer für ein Erreichen einer benötigten Ladekapazität berechnet und die benötigte Ladekapazität anhand eines Energiebedarfs einer geplanten Verwendung des Haushaltsgerätes berechnet.

Erfindungsgemäß wird der Ladestartzeitpunkt, zu welchem der Ladebetrieb des Akkumulators gestartet wird, nun so terminiert, insbesondere verzögert, dass der Ladebetrieb genau dann abgeschlossen ist, wenn der Verwendungszeitpunkt des Haushaltsgerätes erreicht ist, d. h. zu dem Zeitpunkt, zu welchem das Haushaltsgerät verwendet werden soll. Der Ladestartzeitpunkt des Ladebetriebs wird somit in Abhängigkeit von dem geplanten Verwendungszeitpunkt derart festgelegt, dass der Akkumulator zum Zeitpunkt der geplanten Verwendung mit der benötigten Ladekapazität aufgeladen ist und somit ein Ladungserhaltungsmodus nicht mehr benötigt wird. Somit entfallen durch die Erfindung die negativen Auswirkungen des Ladungserhaltungsmodus auf den Akkumulator, nämlich die Reduzierung der Lebensdauer des Ackumulators aufgrund des von dem Ladungserhaltungsmodus beschleunigten Alterungsprozesses. Zudem wird die benötigte Ladekapazität besonders stromsparend bereitgestellt, da die Ladekapazität pünktlich zum Verwendungszeitpunkt des Haushaltsgerätes sichergestellt wird, ohne dass ein Ladungserhaltungsmodus verwendet werden muss. Der Ladestartzeitpunkt kann von einer Steuereinrichtung des Haushaltsgerätes gesteuert werden, welche die Ladedauer und den Verwendungszeitpunkt des Haushaltsgerätes berücksichtigt, oder alternativ von einer externen Steuereinrichtung, welche auf das Haushaltsgerät zugreift, insbesondere über eine zwischen dem Haushaltsgerät und der externen Steuereinrichtung bestehende Kommunikationsverbindung. Des Weiteren ist eine Steuerung des Ladestartzeitpunktes auch über ein Zusammenwirken einer Steuereinrichtung des Haushaltsgerätes mit einer externen Steuereinrichtung, insbesondere unter Durchführen eines Datenaustausches, möglich.

Insbesondere wird vorgeschlagen, dass eine voraussichtliche Ladedauer für ein Erreichen einer benötigten Ladekapazität berechnet wird. Um den verzögerten Ladestartzeitpunkt berechnen zu können, ist ausgehend von dem bekannten Verwendungszeitpunkt, zu welchem das Haushaltsgerät benötigt wird, die voraussichtliche Ladedauer in Abzug zu bringen, so dass die Ladedauer genau dann beendet ist, wenn das Haushaltsgerät benötigt wird. Die benötigte Ladedauer wird berechnet, indem berücksichtigt wird, welche Ladekapazität benötigt wird und zu welchem Anteil der Akkumulator gegebenenfalls schon geladen ist. Ausgehend von dem Ladestartzeitpunkt ergibt sich unter Addition der berechneten Ladedauer der Verwendungszeitpunkt des Haushaltsgerätes.

Des Weiteren wird vorgeschlagen, dass der Verwendungszeitpunkt anhand eines vorgegebene Verwendungszeiten und/oder Betriebsarten des Haushaltsgerätes beinhaltenden Verwendungszeitplanes des Haushaltsgerätes ermittelt wird. Der Verwendungszeitplan kann innerhalb eines Speichers des Haushaltsgerätes oder auch innerhalb eines zu dem Haushaltsgerät externen Speichers gespeichert sein. Der Verwendungszeitplan beinhaltet beispielsweise eine kalendarisch geführte Datenbank mit Jahreszeiten, Monaten, Wochentagen, Uhrzeiten und dergleichen, zu welchen das Haushaltsgerät verwendet wird. Insbesondere kann der Verwendungszeitplan eine Verwendung des Haushaltsgerätes in unterschiedlichen Räumen einer Wohnung beinhalten. Des Weiteren kann innerhalb des Verwendungszeitplans auch eine Betriebsart des Haushaltsgerätes gespeichert sein, beispielsweise ein Reinigungsbetrieb in einem Stromsparmodus, ein Spotreinigungsbetrieb zum Reinigen einer besonders schmutzintensiven Region eines Raumes oder einer Wohnung und dergleichen. Zur Berechnung des Ladestartzeitpunktes greift eine Auswerte- und Steuereinrichtung auf diesen Verwendungszeitplan zu, prüft wann eine zeitlich nächste Verwendung des Haushaltsgerätes geplant ist, gegebenenfalls welche Art von Verwendung geplant ist, und berechnet unter Berücksichtigung der benötigten Ladedauer den Ladestartzeitpunkt, d. h. denjenigen Zeitpunkt zu welchem das Aufladen des Akkumulators gestartet werden muss, um pünktlich zu dem geplanten Verwendungszeitpunkt mit dem Ladebetrieb fertig zu sein. Der Verwendungszeitplan des Haushaltsgerätes kann insbesondere auch in einem externen Kommunikationsgerät gespeichert sein, wobei hierzu gegebenenfalls eine Datenkommunikation wie vorzugsweise eine Funkkommunikation verwendet wird. Das externe Kommunikationsgerät kann beispielsweise ein Mobiltelefon, ein Tablet-Computer, ein Laptop oder dergleichen sein.

Des Weiteren wird vorgeschlagen, dass der Verwendungszeitplan anhand eines ermittelten Verwendungsmusters früherer Verwendungszeiten und/oder Betriebsarten des Haushaltsgerätes erstellt und/oder bearbeitet wird. Zur Erstellung des Verwendungszeitplans werden zeitlich in der Vergangenheit liegende Verwendungszeiten und/oder Betriebsarten des Haushaltsgerätes gespeichert und analysiert, um aus der Vielzahl von Daten ein Verwendungsmuster des Haushaltsgerätes zu erkennen. Das Verwendungsmuster kann Informationen zu Tagen, Uhrzeiten und benutzten Funktionen des Haushaltsgerätes enthalten, welche beispielsweise in Kalenderform hinterlegt werden, gegebenenfalls auch in Verbindung mit einer Wahrscheinlichkeitsangabe gespeichert werden, die angibt, wie wahrscheinlich eine Wiederholung des erkannten Verwendungsmusters ist. Das Verwendungsmuster kann beispielsweise in der Vergangenheit wiederholt angewandte Reinigungsvorgänge eines Reinigungsroboters beinhalten, insbesondere bestimmte Zeitpunkte und gegebenenfalls bestimmte Betriebsmodi, welche bei der Verwendung des Reinigungsgerätes benutzt wurden. Anhand dieses Verwendungszeitplans und des darin gespeicherten Verwendungsmusters kann entnommen werden, wann die nächste Verwendung des Haushaltsgerätes fällig ist und welche Art der Verwendung auszuführen ist. Davon abhängig kann zurückgerechnet werden, wann ein Ladebetrieb mit einer berechneten oder bekannten Ladedauer gestartet werden muss, um den Akkumulator rechtzeitig aufzuladen.

Es wird vorgeschlagen, dass der Verwendungszeitplan von einem Nutzer des Haushaltsgerätes erstellt und/oder bearbeitet wird, und/oder dass der Verwendungszeitplan mittels einer Bedieneinrichtung des Haushaltsgerätes oder mittels eines eine Kommunikationsverbindung zu dem Haushaltsgerät aufweisenden externen Gerätes erstellt und/oder bearbeitet wird. Der Verwendungszeitplan kann beispielsweise über eine Bedieneinrichtung wie eine Tastatur oder ein Touchscreen des Haushaltsgerätes eingegeben werden. Alternativ kann ein Nutzer des Haushaltsgerätes eine Eingabe auch mittels eines externen Gerätes, beispielsweise einer Fernsteuerung oder eines mobilen Kommunikationsgerätes wie eines Smartphones oder Tablet-Computers, durchführen. Des Weiteren ist auch eine automatische Erstellung und Bearbeitung, insbesondere Aktualisierung, des Verwendungszeitplans denkbar, indem beispielsweise eine Auswerte- und Steuereinrichtung des Haushaltsgerätes ein Verwendungsmuster analysiert und zum Erstellen bzw. Bearbeiten des Verwendungszeitplans verwendet. In diesem Fall muss ein Nutzer keine manuelle Eingabe durchführen, vielmehr wird der Verwendungszeitplan bei jeder erneuten Verwendung des Haushaltsgerätes aktualisiert oder zumindest überprüft. Das Erstellen bzw. Bearbeiten des Verwendungszeitplans, insbesondere das Erfassen von Verwendungszeitpunkten, kann auch mittels einer Zentraleinheit durchgeführt werden, die außerhalb des Haushaltsgerätes angeordnet ist und einen drahtlosen Kommunikationskanal, zum Beispiel per WLAN, Bluetooth oder ZigBee, oder einen drahtgebundenen Kommunikationskanal, zum Beispiel Powerline-LAN, zu dem Haushaltsgerät aufweist. Die Zentraleinheit kann als eine lokale Einheit oder auch als ein Webserversystem (Cloud) ausgebildet sein.

Es kann vorgesehen sein, dass der Verwendungszeitpunkt unter Berücksichtigung externer Umweltparameter, insbesondere Wetterdaten, vorgegeben wird. Des Weiteren kann vorgesehen sein, dass der Verwendungszeitpunkt unter Berücksichtigung eines geplante Tätigkeiten eines Nutzers enthaltenden Nutzerkalenders vorgegeben wird. Gemäß dieser Ausgestaltung werden externe Informationen genutzt, die Bedingungen außerhalb des Haushaltsgerätes betreffen. Dies können beispielsweise Informationen über ein aktuelles Wetter, Informationen über einen Verschmutzungsgrad von Räumlichkeiten und dergleichen sein. Ausgehend von diesen Informationen kann ein Verwendungszeitpunkt des Haushaltsgerätes geplant werden, insbesondere Verwendungsintervalle oder auch Betriebsdauern des Haushaltsgerätes gesteuert werden. Beispielsweise ist es möglich, dass bei regnerischem Wetter eine größere Wahrscheinlichkeit dafür besteht, dass zu reinigende Räumlichkeiten besonders verschmutzt sind, sich Personen innerhalb der Räumlichkeiten befinden und dergleichen. Das Haushaltsgerät bzw. die den Verwendungszeitplan berechnende Steuer- und Auswerteeinrichtung kann zu diesem Zweck auf einen externen Server zugreifen, welcher Wetterinformationen bereitstellt. Besonders vorteilhaft ist die Bestimmung eines Verwendungszeitpunktes anhand eines Nutzerkalenders, welcher geplante Tätigkeiten eines Nutzers beinhaltet. Anhand dieses Nutzerkalenders kann beispielsweise bestimmt werden, wann sich der Nutzer innerhalb der Räumlichkeiten aufhält, in welchem Raum er sich mit einer großen Wahrscheinlichkeit bevorzugt aufhält, welche Tätigkeit er dabei ausführen wird oder wann er heimkehren wird. Im Falle eines Reinigungsroboters kann eine Verwendung des Haushaltsgerätes dann vorteilhaft sein, wenn sich gewöhnlich kein Nutzer innerhalb der Räumlichkeiten aufhält. Sofern es sich bei dem Haushaltsgerät beispielsweise um eine Küchenmaschine handelt, kann im Gegensatz dazu eine Verwendung dann vorteilhaft sein, beispielsweise der Beginn eines Kochvorgangs, wenn der Nutzer zu Hause ist und im Falle einer Fehlfunktion des Haushaltsgerätes eingreifen kann. Die Verwendungszeitpunkte von verschiedenen Haushaltsgeräten, wie beispielsweise Reinigungsrobotern, Küchenmaschinen oder anderen können somit in Verbindung mit den Informationen des Nutzerkalenders ganz unterschiedlich geplant werden, was wiederum auch den optimalen Ladestartzeitpunkt beeinflusst, um den Abschluss des Ladebetriebs des Akkumulators des Haushaltsgerätes zum Zeitpunkt der Verwendung sicherzustellen.

Es wird vorgeschlagen, dass die benötigte Ladekapazität eine maximal zu erreichende Kapazität des Akkumulators ist. Dementsprechend wird die Ladedauer für den Ladebetrieb immer auf eine maximale Kapazität des Akkumulators, d. h. auf eine vollständige Ladung des Akkumulators, berechnet. Die benötigte Ladekapazität wird somit immer als die maximale Ladekapazität angenommen, selbst dann, wenn für die geplante Verwendung des Haushaltsgerätes nur ein Teil der in dem Akkumulator gespeicherten Energie erforderlich ist.

Des Weiteren kann vorgesehen sein, dass die benötigte Ladekapazität anhand eines Energiebedarfs einer geplanten Verwendung des Haushaltsgerätes berechnet wird. Bei dieser Ausgestaltung wird der Akkumulator nur soweit geladen, wie dies die geplante Verwendung erfordert. Anhand des kalkulierten Energiebedarfs wird berechnet, welche Ladekapazität benötigt wird. Der Energiebedarf ist abhängig von der Art des Haushaltsgerätes, insbesondere dessen Motorleistung, einem Betriebsmodus, wie beispielsweise einem Energiesparmodus oder einem besonders energieintensiven Arbeitsmodus, und auch der geplanten Verwendung, d. h. derjenigen Aufgabe, die das Haushaltsgerät ausführen soll. Sofern eine geplante Verwendung beispielsweise einen Spotreinigungsmodus zur Reinigung eines bestimmten Teilbereiches eines Raumes beinhaltet, kann anhand des Energiebedarfs für diesen Reinigungsmodus berechnet werden, welchen Ladezustand der Akkumulator zumindest aufweisen muss, um die geplante Aufgabe vollständig erledigen zu können. Sofern das Haushaltsgerät unmittelbar oder auch in kurzen Zeitabständen nacheinander gleiche oder unterschiedliche Arbeitsaufgaben zu erfüllen hat, kann ein Gesamtenergiebedarf berechnet werden, welcher wiederum die benötigte Ladekapazität bestimmt. Der Ladebetrieb des Akkumulators erfordert somit nicht, dass der Akkumulator vollständig geladen wird. Damit darüber hinaus jederzeit zumindest ein eingeschränkter Betrieb des Haushaltsgerätes möglich ist, empfiehlt es sich, eine minimale Ladekapazität des Akkumulators vorzuhalten. Dadurch kann das Haushaltsgerät kurzfristig verwendet werden. Die Aufrechterhaltung der minimalen Ladekapazität kann durch eine Schwellwertabfrage erfolgen, wobei beim Unterschreiten des Schwellwerts ein Ladebetrieb des Akkumulators unabhängig von einem geplanten Verwendungszeitpunkt durchgeführt wird. Durch die Mindestladekapazität wird sichergestellt, dass beispielsweise bezogen auf ein Reinigungsgerät eine spontane Reinigung durchgeführt werden kann, wenn eine plötzliche Verschmutzung auftritt.

Des Weiteren wird vorgeschlagen, dass die voraussichtliche Ladedauer zum Erreichen der benötigten Ladekapazität anhand einer aktuellen Ladekapazität und/oder anhand eines aktuellen Zustandes des Akkumulators, insbesondere anhand eines Alters des Akkumulators, ermittelt wird. Je nach der aktuellen Ladekapazität, d. h. einem aktuellen Ladeanteil, des Akkumulators wird eine andere Zeitspanne benötigt, um die gewünschte Ladekapazität, welche zum Ausführen der geplanten Verwendung notwendig ist, zu erreichen. Sofern der Akkumulator beispielsweise noch halbvoll geladen ist, wird eine geringere Ladedauer benötigt als bei einem nahezu vollständig entladenen Akkumulator. Des Weiteren spielt auch der aktuelle Zustand des Akkumulators, welcher sich insbesondere im Laufe des Betriebsalters des Akkumulators verändert, eine Rolle. Daher kann insbesondere eine regelmäßige Prüfung des Zustands des Akkumulators vorteilhaft sein, um eine Information über eine voraussichtliche Ladedauer zu erhalten. Die den Ladebetrieb steuernde Steuer- und Auswerteeinrichtung erhält somit eine Information, in welchem Zustand sich der Akkumulator befindet, beispielsweise Informationen über eine derzeit noch zu erreichende maximale Ladekapazität des Akkumulators, eine Information über den Alterungszustand und dergleichen, und kann daraus errechnen, wie lange eine Aufladung des Akkumulators bis zu der gewünschten Ladekapazität dauern wird. Die Information über die aktuelle Ladekapazität, die maximal mögliche Ladekapazität und/oder das Alter des Akkumulators kann kontinuierlich erfasst werden oder in regelmäßigen Zeitabständen.

Schließlich wird neben dem zuvor beschriebenen Verfahren zum Betrieb eines Haushaltsgerätes des Weiteren auch ein Haushaltsgerät mit einem Akkumulator und einer Steuer- und Auswerteeinrichtung zum Steuern eines Ladestartzeitpunktes eines Ladebetriebs des Akkumulators vorgeschlagen, wobei die Steuer- und Auswerteeinrichtung eingerichtet und ausgebildet ist, ein Verfahren nach einem der zuvor beschriebenen Ausführungsformen auszuführen. Bei dem Haushaltsgerät kann es sich um unterschiedliche Geräte handeln, beispielsweise Reinigungsgeräte, Küchenmaschinen, Mähroboter, Poliergeräte, Fensterreinigungsgeräte oder andere Geräte, welche einen Akkumulator aufweisen. Insbesondere handelt es sich bei dem erfindungsgemäßen Haushaltsgerät um ein sich selbsttätig fortbewegendes Haushaltsgerät, insbesondere einen Saugroboter, Wischroboter, Rasenmähroboter oder dergleichen.

Das Haushaltsgerät ist im Sinne eines Systems mit einer Ladestation kompatibel, welche geeignet ist, den Akkumulator des Haushaltsgerätes aufzuladen. Die Steuer- und Auswerteeinrichtung kann innerhalb des Systems entweder dem Haushaltsgerät oder der Ladestation zugeordnet sein, wobei das Haushaltsgerät und die Ladestation vorteilhaft eine Kommunikationsverbindung zueinander aufweisen. Ein Speicher zur Speicherung des zuvor beschriebenen Verwendungszeitplans kann dabei ein Speicher des Haushaltsgerätes, ein Speicher der Ladestation oder auch ein Speicher eines externen Gerätes oder eines Webservers sein. Die weiteren Merkmale und Vorteile des Haushaltsgerätes bzw. des Systems aus dem Haushaltsgerät und der Ladestation bzw. einem externen Gerät oder externen Speicher ergeben sich dabei wie zuvor in Bezug auf das Verfahren näher erläutert.

### Kurze Beschreibung der Zeichnung

Im Folgenden wird die Erfindung anhand eines Ausführungsbeispiels näher erläutert. Es zeigt:

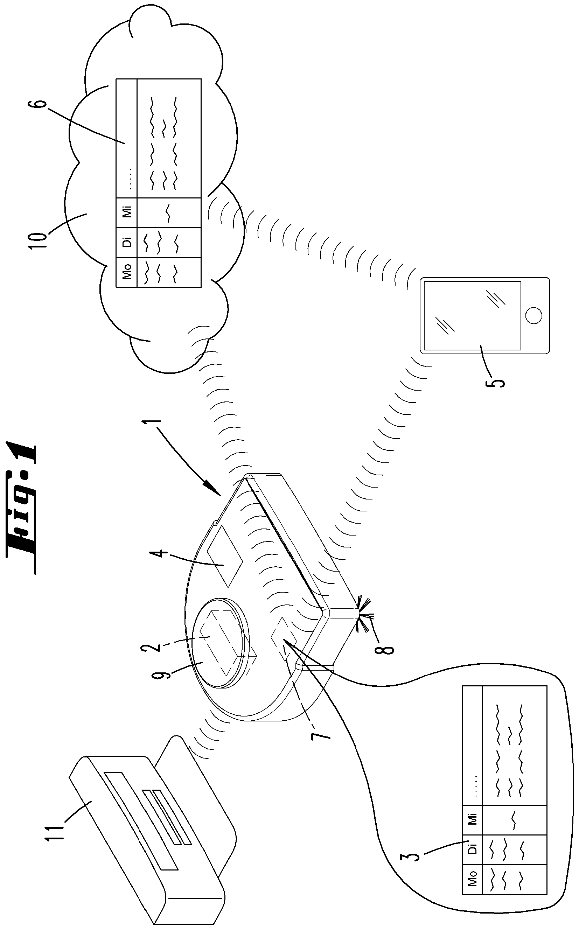

- Fig. 1: ein System aus einem Haushaltsgerät, einer Ladestation, einem externen Gerät und einem Webserver.

### Beschreibung der Ausführungsformen

Figur 1 zeigt ein Haushaltsgerät 1, welches hier als sich selbsttätig fortbewegender Reinigungsroboter ausgebildet ist. Das Haushaltsgerät 1 ist hier insbesondere ein Saugroboter mit mehreren Reinigungselementen 8, welche unter anderem auch die in der Figur sichtbare Seitenbürste beinhalten. In üblicher Weise verfügt das Haushaltsgerät 1 über angetriebene Verfahrräder, mit welchen sich das Haushaltsgerät 1 innerhalb eines oder mehrerer Räume fortbewegen kann. Das Haushaltsgerät 1 verfügt hier des Weiteren über eine Distanzmesseinrichtung 9, beispielsweise eine Triangulationsmesseinrichtung, welche Abstände zu Hindernissen misst und zur Navigation des Haushaltsgerätes 1 innerhalb der Räumlichkeiten dient. Das Haushaltsgerät 1 weist einen Akkumulator 2, eine Bedieneinrichtung 4 und einen Speicher 7 auf. Die Bedieneinrichtung 4 ist hier ein berührungssensitives Display, nämlich ein Touchscreen, über welches ein Nutzer Eingaben und Befehle an das Haushaltsgerät 1 übermitteln kann. Alternativ oder zusätzlich kann die Bedieneinrichtung 4 auch Tasten, Knöpfe, Drehschalter oder dergleichen aufweisen, mit deren Hilfe eine Eingabe möglich ist.

Das Haushaltsgerät 1 steht über eine nicht dargestellte Kommunikationseinrichtung in Funkverbindung mit einem externen Gerät 5, hier einem Mobiltelefon, sowie mit einer Ladestation 11, welche zum Aufladen des Akkumulators 2 des Haushaltsgerätes 1 dient, sowie einem externen Speicher 10, welcher hier auf einem Webserver bereitgestellt ist. Das Haushaltsgerät 1 kann in üblicher Art und Weise mit der Ladestation 11 verbunden werden, insbesondere durch eine selbsttätige Fortbewegung an die Ladestation 11, so dass der Akkumulator 2 dort aufgeladen werden kann. Dazu verfügen das Haushaltsgerät 1 und die Ladestation 11 über korrespondierende elektrische Kontakte oder alternativ gegebenenfalls eine induktive Ladeeinrichtung.

Gemäß dem hier gezeigten Ausführungsbeispiel, welches jedoch in keiner Weise beschränkend zu verstehen ist, ist in dem externen Speicher 10 ein Nutzerkalender 6 gespeichert, welcher ein Terminkalender eines Nutzers ist, der nach Wochentagen aufgelistete Aktivitäten des Nutzers beinhaltet, beispielsweise Verabredungstermine, Arzttermine, Termine von Vereinsaktivitäten und dergleichen. Der eigene Speicher 7 des Haushaltsgerätes 1 verfügt zudem über einen Verwendungszeitplan 3 des Haushaltsgerätes 1, welcher ebenfalls kalendarisch geplante und/oder wiederkehrende Verwendungszeitpunkte für das Haushaltsgerät 1 beinhaltet.

Ein erfindungsgemäßes Verfahren zum Betrieb des Haushaltsgerätes 1 kann nun vorsehen, dass in dem Verwendungszeitplan 3 des Haushaltsgerätes 1 mehrere Termine gespeichert sind, zu welchen das Haushaltsgerät 1 eine Saugreinigung innerhalb eines oder mehrerer Räume einer Wohnung durchzuführen hat. Beispielsweise sieht der Verwendungszeitplan 3 für einen bestimmten Wochentag, hier beispielsweise den nächsten Montag, eine Saugreinigung eines bestimmten Raumes, hier beispielsweise einer Küche, vor. Der geplante Verwendungszeitpunkt ist beispielsweise für vormittags, 10:00 Uhr, geplant. Damit der Akkumulator 2 des Haushaltsgerätes 1 zu diesem Zeitpunkt eine notwendige Ladekapazität aufweist, vorzugsweise vollständig geladen ist, wird eine voraussichtliche Ladedauer berechnet, die erforderlich ist, um den Akkumulator 2 vollständig zu laden. Um die Ladedauer zu berechnen, fragt eine Steuer- und Auswerteeinrichtung des Haushaltsgerätes 1 eine aktuelle Ladekapazität des Akkumulators 2 sowie gegebenenfalls vorliegende Fehlerzustände oder Ladedauerverzögerungen, welche durch einen fortschreitenden Alterungszustand des Haushaltsgerätes 1 bedingt sind, ab. Aus der Differenz zwischen der gewünschten Ladekapazität und der aktuellen Ladekapazität des Akkumulators 2 wird dann eine Kapazitätsdifferenz berechnet, welche innerhalb des Ladebetriebs zu kompensieren ist. Unter Berücksichtigung der Leistung der Ladestation 11 für den Ladebetrieb wird sodann berechnet, wie lange die Ladedauer voraussichtlich sein wird. Sodann wird ausgehend von dem geplanten Verwendungszeitpunkt zurückgerechnet, wann der Ladebetrieb zu starten ist, um nach Beendigung der vollständigen Ladedauer pünktlich zu dem Verwendungszeitpunkt fertig zu sein. Falls hier beispielsweise eine Ladedauer von zwei Stunden berechnet wird, ist der Ladestartzeitpunkt um 8:00 Uhr morgens anzusetzen. Die Steuer- und Auswerteeinrichtung des Haushaltsgerätes 1 wird das Haushaltsgerät 1 nun so steuern, dass dieses rechtzeitig an die Ladestation 11 fährt, um dort aufgeladen zu werden. Somit wird zudem vermieden, dass der Akkumulator 2 vorzeitig geladen wird und somit ein Ladungserhaltungsmodus nach Beendigung des vollzogenen Ladebetriebs und vor Erreichen des Verwendungszeitpunktes des Haushaltsgerätes 1 erforderlich ist.

Ausgehend von dieser beispielhaften Verwendung des Haushaltsgerätes 1 ist des Weiteren eine Vielzahl von abgewandelten Ausführungsformen denkbar, bei welchen das Haushaltsgerät 1 zur Steuerung des Ladestartzeitpunktes für den Ladebetrieb des Akkumulators 2 eine Kommunikation mit dem externen Gerät 5 und/oder dem externen Speicher 10 durchführt. Beispielsweise kann es vorgesehen sein, dass Informationen über die Verwendungszeitpunkte und/oder Betriebsarten des Haushaltsgerätes 1 innerhalb des Speichers 7 oder alternativ innerhalb des externen Speichers 10 gespeichert sind und in Bezug auf ein wiederkehrendes Verwendungsmuster analysiert werden. Das Verwendungsmuster kann beispielsweise beinhalten, dass bestimmte Betriebsarten des Haushaltsgerätes 1 wiederkehrend zu bestimmten Zeitpunkten erfolgen. Davon ausgehend wird der Verwendungszeitplan 3 des Haushaltsgerätes 1, welcher Informationen über demnächst anstehende Verwendungen des Haushaltsgerätes 1 gibt, erstellt oder aktualisiert. Zudem kann ein externer Speicher 10 auf einem Webserver oder auf einem externen Gerät 5, wie hier beispielsweise dem Mobiltelefon, einen Nutzerkalender 6 beinhalten, welcher Termine und insbesondere Abwesenheitszeitpunkte des Nutzers beinhaltet. Die Information des Nutzerkalenders 6 können mit den Informationen des Verwendungszeitplans 3 kombiniert werden, um eine nächste Verwendung des Haushaltsgerätes 1 zu planen bzw. zu bestimmen und somit einen Ladestartzeitpunkt für das Aufladen des Akkumulators 2 zu berechnen. Der Verwendungszeitplan 3 und der Nutzerkalender 6 können auch zu einem gemeinsamen Kalender fusioniert werden. Des Weiteren können auch andere Informationen hinzugezogen werden, beispielsweise Informationen über eine aktuelle Wetterlage und dergleichen. Neben dem automatischen Erstellen des Verwendungszeitplans 3 anhand beispielsweise wiederkehrender Verwendungsmuster kann es auch vorgesehen sein, dass ein Nutzer des Haushaltsgerätes 1 manuelle Eingaben über die Bedieneinrichtung 4 des Haushaltsgerätes 1 oder mittels des externen Gerätes 5 tätigt. Diese Eingaben können beispielsweise Verwendungszeitpunkte beinhalten, welche der Nutzer innerhalb des Verwendungszeitplans 3 ergänzt. Sofern in kurzen Zeitabständen mehrere Verwendungen des Haushaltsgerätes 1 geplant sind, kann ein Gesamtenergiebedarf berechnet werden, um die aufeinanderfolgenden Verwendungen optimal durchführen zu können. Anhand der berechneten Gesamtenergie kann dann ermittelt werden, welche Ladekapazität des Akkumulators benötigt wird. Dies bestimmt dann wiederum die benötigte Ladedauer und den einzuhaltenden Ladestartzeitpunkt, um den Akkumulator 2 vor Beginn der ersten Aktivität rechtzeitig aufzuladen.

### Liste der Bezugszeichen

- 1: Haushaltsgerät
- 2: Akkumulator
- 3: Verwendungszeitplan
- 4: Bedieneinrichtung
- 5: Externes Gerät
- 6: Nutzerkalender
- 7: Speicher
- 8: Reinigungselement
- 9: Distanzmesseinrichtung
- 10: Externer Speicher
- 11: Ladestation

## Patentansprüche

1. Verfahren zum Betrieb eines einen Akkumulator (2) und eine Steuer- und Auswerteeinrichtung zum Steuern eines Ladestartzeitpunktes eines Ladebetriebs des Akkumulators (2) aufweisenden Haushaltsgerätes (1), wobei ein Ladestartzeitpunkt eines Ladebetriebs zum Laden des Akkumulators (2) in Abhängigkeit von vorgegebenen Bedingungen gesteuert wird, **dadurch gekennzeichnet, dass** die Steuer- und Auswerteeinrichtung den Ladestartzeitpunkt in Abhängigkeit von einer Ladedauer und einem vorgegebenen Verwendungszeitpunkt des Haushaltsgerätes (1) so steuert, dass der Ladebetrieb genau dann abgeschlossen ist, wenn der Verwendungszeitpunkt erreicht ist, wobei die Steuer- und Auswerteeinrichtung eine voraussichtliche Ladedauer für ein Erreichen einer benötigten Ladekapazität berechnet und die benötigte Ladekapazität anhand eines Energiebedarfs einer geplanten Verwendung des Haushaltsgerätes (1) berechnet.

2. Verfahren nach Anspruch 1, **dadurch gekennzeichnet, dass** der Verwendungszeitpunkt anhand eines vorgegebene Verwendungszeiten und/oder Betriebsarten des Haushaltsgerätes (1) beinhaltenden Verwendungszeitplanes (3) des Haushaltsgerätes (1) ermittelt wird.

3. Verfahren nach Anspruch 2, **dadurch gekennzeichnet, dass** der Verwendungszeitplan (3) anhand eines ermittelten Verwendungsmusters früherer Verwendungszeiten und/oder Betriebsarten des Haushaltsgerätes (1) erstellt und/oder bearbeitet wird.

4. Verfahren nach Anspruch 2 oder 3, **dadurch gekennzeichnet, dass** der Verwendungszeitplan (3) von einem Nutzer des Haushaltsgerätes (1) erstellt und/oder bearbeitet wird, und/oder dass der Verwendungszeitplan (3) mittels einer Bedieneinrichtung (4) des Haushaltsgerätes (1) oder mittels eines eine Kommunikationsverbindung zu dem Haushaltsgerät (1) aufweisenden externen Gerätes (5) erstellt und/oder bearbeitet wird.

5. Verfahren nach einem der vorhergehenden Ansprüche, **dadurch gekennzeichnet, dass** der Verwendungszeitpunkt unter Berücksichtigung externer Umweltparameter, insbesondere Wetterdaten, und/oder eines geplante Tätigkeiten eines Nutzers enthaltenden Nutzerkalenders (6) vorgegeben wird.

6. Verfahren nach einem der vorhergehenden Ansprüche, **dadurch gekennzeichnet, dass** die benötigte Ladekapazität eine maximal zu erreichende Kapazität des Akkumulators (2) ist.

7. Verfahren nach einem der vorhergehenden Ansprüche, **dadurch gekennzeichnet, dass** die voraussichtliche Ladedauer zum Erreichen der benötigten Ladekapazität anhand einer aktuellen Ladekapazität und/oder anhand eines aktuellen Zustandes des Akkumulators (2), insbesondere anhand eines Alters des Akkumulators (2), ermittelt wird.

8. Haushaltsgerät (1) mit einem Akkumulator (2) und einer Steuer- und Auswerteeinrichtung zum Steuern eines Ladestartzeitpunktes eines Ladebetriebs des Akkumulators (2), **dadurch gekennzeichnet, dass** die Steuer- und Auswerteeinrichtung eingerichtet und ausgebildet ist, ein Verfahren nach einem der vorhergehenden Ansprüche auszuführen.

## Claims

1. A method for operating a household appliance (1) with an accumulator (2) and a control and evaluation device for controlling a charging start time of a charging operation of the accumulator (2), wherein the charging start time of a charging operation for charging the accumulator (2) is controlled in dependence on predefined conditions, **characterized in that** the control and evaluation device controls the charging start time is controlled in dependence on a charging period and a predefined time of use of the household appliance (1) in such a way that the charging operation is completed exactly when the time of use is reached, wherein the control and evaluation device calculates an expected charging period for reaching a required charge capacity and calculates the required charge capacity based on an energy demand for a scheduled use of the household appliance (1).

2. The method according to claim 1, **characterized in that** the time of use is determined based on a usage schedule (3) of the household appliance (1), which contains predefined times of use and/or operating modes of the household appliance (1).

3. The method according to claim 2, **characterized in that** the usage schedule (3) is prepared and/or processed based on a determined usage pattern of prior times of use and/or operating modes of the household appliance (1).

4. The method according to claim 2 or 3, **characterized in that** the usage schedule (3) is prepared and/or processed by a user of the household appliance (1) and/or that the usage schedule (3) is prepared and/or processed by means of an operating device (4) of the household appliance (1) or by means of an external device (5) that is communicatively linked to the household appliance (1).

5. The method according to one of the preceding claims, **characterized in that** the time of use is predefined with consideration of external environmental parameters, particularly weather data, and/or a user calendar (6) containing scheduled activities of a user.

6. The method according to one of the preceding claims, **characterized in that** the required charge capacity is a maximum capacity of the accumulator (2).

7. The method according to one of the preceding claims, **characterized in that** the expected charging period for reaching the required charge capacity is determined based on a current charge capacity and/or based on a current state of the accumulator (2), particularly an age of the accumulator (2).

8. A household appliance (1) with an accumulator (2) and a control and evaluation device for controlling a charging start time of a charging operation of the accumulator (2), **characterized in that** the control and evaluation device is designed and realized for carrying out a method according to one of the preceding claims.

## Revendications

1. Procédé pour faire fonctionner un appareil ménager (1) présentant un accumulateur (2) et un dispositif de commande et d'évaluation pour commander un moment de début de charge d'une opération de charge de l'accumulateur (2), dans lequel un moment de début de charge d'une opération de charge pour charger l'accumulateur (2) est commandé en fonction de conditions prédéfinies, **caractérisé en ce que** le dispositif de commande et d'évaluation commande le moment de début de charge en fonction d'une durée de charge et d'un moment d'utilisation prédéfini de l'appareil ménager (1) de manière que l'opération de charge soit terminée exactement lorsque le moment d'utilisation est atteint, dans lequel le dispositif de commande et d'évaluation calcule une durée de charge prévisible pour atteindre une capacité de charge nécessaire et calcule la capacité de charge nécessaire en se fondant sur un besoin en énergie d'une utilisation planifiée de l'appareil ménager (1).

2. Procédé selon la revendication 1, **caractérisé en ce que** le moment d'utilisation est déterminé en se fondant sur un planning d'utilisation (3) de l'appareil ménager (1) contenant des moments d'utilisation et/ou des modes de fonctionnement prédéfinis de l'appareil ménager (1).

3. Procédé selon la revendication 2, **caractérisé en ce que** le planning d'utilisation (3) est établi et/ou traité en se fondant sur un schéma d'utilisation déterminé de moments d'utilisation et/ou de modes de fonctionnement antérieurs de l'appareil ménager (1).

4. Procédé selon la revendication 2 ou 3, **caractérisé en ce que** le planning d'utilisation (3) est établi et/ou traité par un utilisateur de l'appareil ménager (1), et/ou **en ce que** le planning d'utilisation (3) est établi et/ou traité au moyen d'un dispositif de commande (4) de l'appareil ménager (1) ou au moyen d'un appareil externe (5) présentant une liaison de communication avec l'appareil ménager (1).

5. Procédé selon l'une des revendications précédentes, **caractérisé en ce que** le moment d'utilisation est prédéfini en tenant compte de paramètres environnementaux externes, en particulier de données météorologiques, et/ou d'un calendrier d'utilisateur (6) contenant des activités planifiées d'un utilisateur.

6. Procédé selon l'une des revendications précédentes, **caractérisé en ce que** la capacité de charge nécessaire est une capacité maximale à atteindre de l'accumulateur (2).

7. Procédé selon l'une des revendications précédentes, **caractérisé en ce que** la durée de charge prévisible pour atteindre la capacité de charge nécessaire est déterminée en se fondant sur une capacité de charge actuelle et/ou en se fondant sur un état actuel de l'accumulateur (2), en particulier en se fondant sur un âge de l'accumulateur (2).

8. Appareil ménager (1) avec un accumulateur (2) et un dispositif de commande et d'évaluation pour commander un moment de début de charge d'une opération de charge de l'accumulateur (2), **caractérisé en ce que** le dispositif de commande et d'évaluation est conçu et réalisé pour exécuter un procédé selon l'une des revendications précédentes.
